Europäisches Patentamt

European Patent Office

Office européen des brevets

(11) Veröffentlichungsnummer: **0 305 899**

**A2**

(12) **EUROPÄISCHE PATENTANMELDUNG**

(21) Anmeldenummer: 88113863.0

(51) Int. Cl.⁴: **C08B 11/20**

(22) Anmeldetag: **25.08.88**

(30) Priorität: **02.09.87 DE 3729240**

(43) Veröffentlichungstag der Anmeldung:
**08.03.89 Patentblatt 89/10**

(84) Benannte Vertragsstaaten:
**BE CH DE FR GB IT LI NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Wüst, Willi, Dr.**
**Fasanenring 32**
**D-4030 Ratingen-Hösel(DE)**
Erfinder: **Rähse, Wilfried, Dr.**
**Kolhagenstrasse 44**
**D-4000 Düsseldorf 13(DE)**
Erfinder: **Just, Günther**
**Verdistrasse 48**
**D-4010 Hilden(DE)**
Erfinder: **Kühling, Dieter, Dr.**
**Robert-Koch-Strasse 3**
**D-4019 Monheim(DE)**
Erfinder: **Emde, Siegfried**
**Erlanger Strasse 45**
**D-4000 Düsseldorf 13(DE)**
Erfinder: **Kühn, Erhard**
**Ginsterweg 8**
**D-4156 Willich 1(DE)**

(54) **Verfahren zum Reinigen von Celluloseethern.**

(57) Zur Reinigung von Celluloseethern ohne bzw. mit relativ hohen Flockungspunkten (bis zu 95 °C) sowie von thermoplastischen, das heißt hoch propoxylierten Produkten, hergestellt aus Cellulose beliebiger Form, wird das Rohprodukt zunächst suspendiert und anschließend mit Hilfe einer Stülpfilterzentrifuge die Suspensionsflüssigkeit abgetrennt und die ein- oder mehrstufige Wäsche chargenweise durchgeführt.

Fig. 1

## Verfahren zum Reinigen von Celluloseethern

Die Erfindung betrifft ein Verfahren zum Reinigen von Celluloseethern und deren Derivate.

Celluloseether werden technisch durch die Umsetzung von Cellulose, die als Pulver, als kurzgeschnittene Fasern oder in Form von Chips oder Platten vorliegt, in Gegenwart von Natronlauge mit einem oder mehreren Veretherungsmitteln hergestellt. Als Veretherungsmittel werden oft Monochloressigsäure, bzw. das Natriumsalz der Monochloressigsäure, Methylchlorid, Ethylenoxid und/oder Propylenoxid eingesetzt. Je nach Art der Veretherung und Höhe der Substitutionsgrade werden Produkte erhalten, die zum einen entweder keinen Flockungspunkt (z. B. Carboxymethyl-, Hydroxyethylcellulosen) im üblichen Meßbereich von 20 bis 100 °C - und auch darüber hinaus - aufweisen oder die zum anderen bei Temperaturerhöhung unlöslich werden und ausflocken (z. B. Methyl-, Hydroxypropylcellulosen).

Celluloseether ohne Flockungspunkte werden von den üblichen Nebenprodukten, wie Kochsalz, Glykole, Polyglykole, Glykolate durch Wäsche mit Alkohol-Wasser-Mischungen befreit.

Celluloseether mit niedrigen Flockungspunkten können recht einfach durch Wäsche mit Heißwasser von den Nebenprodukten - Kochsalz, Methanol, Glykole - gereinigt und salzfrei gewaschen werden.

Schwierigkeiten bereitet das Aufarbeiten von Derivaten mit Flockungspunkten, die oberhalb von 80 bis 85 °C liegen. Da es keine einheitliche Temperatur gibt, an der alle Makromoleküle einer Lösung gleichzeitig unlöslich werden, sollte man besser von einem Flockungsbereich sprechen, der durch die Angabe des Flockungspunktes charakterisiert wird.

Eine Heißwasserwäsche ist für solche Produkte ohne nennenswerte Produktverluste und Verkleisterung der Aufarbeitungsapparate nicht mehr möglich.

Das Reinigen von Celluloseethern mit relativ hohen Flockungspunkten und solchen mit thermoplastischen Eigenschaften bereitet erhebliche Schwierigkeiten, da zum Abtrennen und Reinigen solcher Substanzen an sich einsetzbare Zentrifugen herkömmlicher Art einen Produktaustrag ohne Scherung nicht zulassen, in den Zentrifugen verbleibende Restschichten ohne besondere Reinigungsverfahren meist nicht zu vermeiden sind und erhebliche Produktverluste aufgrund der relativ groben Siebe beim Abschleudern in Kauf genommen werden müssen.

Der Erfindung liegt die Aufgabe zugrunde, ein Reinigungsverfahren für Celluloseether zu schaffen, das eine universelle Anwendbarkeit für alle Celluloseether, insbesondere auch für Derivate mit hohen Flockungspunkten im Bereich von 80 bis ca. 95 °C und darüber, sowie für thermoplastische, insbesondere propoxylierte Produkte bei minimalem Produktverlust zuläßt sowie einen restschichtfreien und scherungsfreien Produktaustrag ermöglicht.

Die erfindungsgemäße Lösung besteht für das Verfahren eingangs genannter Art darin, daß eine taktweise arbeitende Stülpfilterzentrifuge als Mittel zum Abtrennen der Suspensionsflüssigkeit und Waschen der Celluloseether und deren Derivate verwendet wird.

Das erfindungsgemäße Verfahren ist unabhängig von der Art und Form der eingesetzten Cellulose, welche beispielsweise pulver-, faser-, chipförmig oder als grob gerissene Platte vorliegen kann, anwendbar.

Bei einem Einsatz einer Stülpfilterzentrifuge wird auf das Material des jeweiligen Celluloseethers beim Produktaustrag keine Scherung ausgeübt. Es können daher selbst hoch propoxylierte, thermoplastische Produkte gereinigt werden. Da das Filtertuch einer Stülpfilterzentrifuge beim Stülpvorgang freigeschleudert wird, verbleiben bei Abschluß des jeweiligen Arbeitstakts keine Restschichten in der Maschine und keine Ablagerung am und im Filtertuch.

Da eine Stülpfilterzentrifuge nach dem Prinzip der Tiefenfiltration arbeitet, sind bei passender Wahl des Filtertuchs nur minimale Produktverluste (inclusive Hemicelluloseanteile) in Kauf zu nehmen. Durch eine solche Auswahl des Filtertuchs ergibt sich in Kombination mit dem Freischleudern nach dem Stülpen unerwartet der weitere Vorteil, daß das Produkt am Filtertuch nicht verklebt bzw. in das Tuch nicht eingepreßt wird. Dieser wichtige Effekt konnte um so weniger erwartet werden, als normalerweise damit gerechnet werden mußte, daß sich das Filtertuch der Stülpfilterzentrifuge wegen der fehlenden Rückspülmöglichkeit jeweils in kurzer Zeit zusetzt.

Gemäß weiterer Erfindung werden Celluloseether mit einem Flockungspunkt unter etwa 95 °C in der Stülpfilterzentrifuge mit kochendem Wasser, das heißt mit Wasser einer Temperatur von 100 °C, gewaschen. Demgegenüber werden Celluloseether mit einem Flockungspunkt von mehr als etwa 95 °C mit einer Wasser-Alkohol-Mischung, insbesondere bei etwa 15 bis 60 °C, in der erfindungsgemäß zu verwendenden Stülpfilterzentrifuge gewaschen. Ferner soll für alle Produkte nach Vernetzung eine Wäsche mit Wasser einer Temperatur von 15 bis 40 °C in der Stülpfilterzentrifuge vorgesehen werden.

Weiterhin sieht die Erfindung vor, daß der in der Stülpfilterzentrifuge abgetrennte Filterkuchen vor dem letzten Trockenschleudern zentrifugeninnenseitig mit Wasserdampf beaufschlagt wird.

Vorteilhafterweise wird hierzu gemäß weiterer Erfindung eine innenseitig dampfbeaufschlagbare Stülpfilterzentrifuge verwendet.

Schließlich sieht die Erfindung vor, daß eine Stülpfilterzentrifuge verwendet wird, bei der das Einlaufrohr und die radiale Platte in ihrem gegenseitigen Berührungsbereich dampfdicht gegeneinander sind.

Eine Dampfbeaufschlagung des Filterkuchens ist insbesondere für die Einstellung eines niedrigen Restfeuchtegehaltes in dem Filterkuchen vorteilhaft und trägt auch zur Beschleunigung der Abzentrifugation bei.

Durch die dampfdichte Abdichtung des Zentrifugeninnenraums im Eintrittsbereich des Einlaufrohres wird erreicht, daß der Wasserdampf nur durch den Filterkuchen nach außen strömen kann.

Anhand der schematischen Zeichnung eines Ausführungsbeispiels wird eine Vorrichtung zum Durchführen des erfindungsgemäßen Verfahrens erläutert. Es zeigen:

Fig.1 eine Prinzip-Schnittdarstellung einer Stülpfilterzentrifuge in Arbeitsstellung,

Fig. 2 eine Prinzip-Schnittdarstellung einer Stülpfilterzentrifuge nach dem Stülpvorgang und

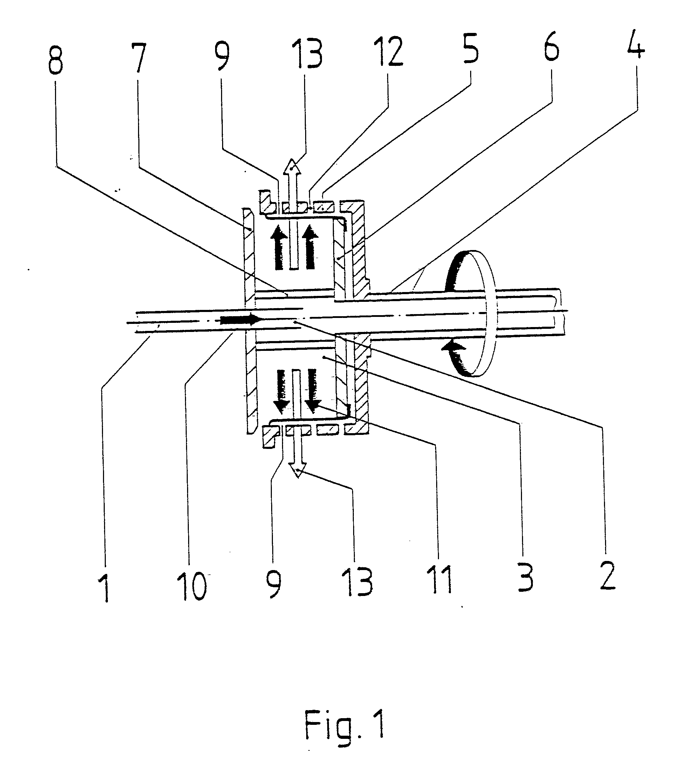

Die Stülpfilterzentrifuge nach Fig. 1 besitzt ein festes Einlaufrohr 1 für Suspensionen und Waschflüssigkeiten sowie gegebenenfalls Wasserdampf mit einem Auslaß 2 zum Zentrifugenraum 3. Koaxial zu dem Einlaufrohr 1 ist eine aus einer Innen- und einer Außenwelle bestehende Antriebswelle 4 vorgesehen. Mit der Außenwelle der Antriebswelle 4 ist ein Spaltsiebkorb 5 fest verbunden und mit der Innenwelle der Antriebswelle 4 ist eine radiale Platte 6 fest verbunden. Weiterhin sind eine radiale Platte 7 über die Platten 6 und 7 verbindende Stege 8 sowie ein Filtertuch 9 über die radiale Platte 6 und den Spaltsiebkorb 5 mit der Antriebswelle 4 verbunden. Die Innen- und Außenwelle der Antriebswelle 4 drehen sich im Anwendungsfall mit derselben Drehzahl. Die Innenwelle ist hydraulisch ausfahrbar. In der Arbeitsstellung nach Fig. 1 steht der Auslaß 2 mit dem Zentrifugenraum 3 über die Zwischenräume der Stege 8 in Verbindung.

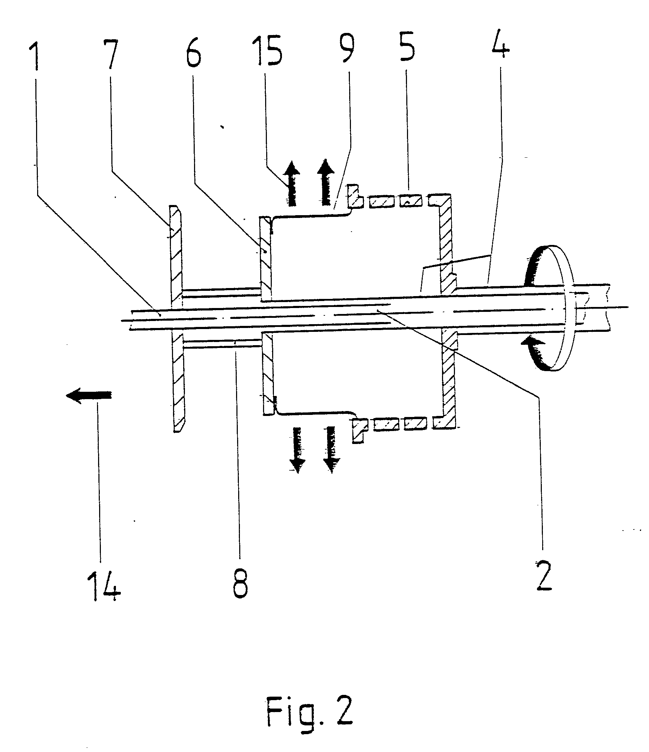

Bei dem Stülpvorgang nach Fig. 2 werden die beiden radialen Platten 6 und 7 aus dem Bereich radial innerhalb des Spaltsiebkorbs 5 herausgefahren, so daß ein Zentrifugeninnenraum im Sinne von Fig. 1 nicht mehr definiert ist. Der Auslaß 2 des Einlaufrohrs 1 befindet sich jedenfalls innerhalb eines geschlossenen Teils der Antriebswelle 4, der die radialen Platten 6 und 7 trägt.

In der Arbeitsstellung nach Fig. 1 wird zunächst eine Suspension über das Einlaufrohr 1 in Pfeilrichtung 10 in den Zentrifugen raum 3 eingebracht. Dort wird die Suspension gegen die Innenfläche des am Umfang des Zentrifugenraums 3 aufgespannten Filtertuchs 9 in Pfeilrichtung 11 gepreßt. Die in der Suspension enthaltene Flüssigkeit kann durch das Filtertuch 9 und im Spaltsiebkorb 5 vorgesehene Löcher oder Schlitze 12 in Pfeilrichtung 13 entweichen. Nach dem auf diese Weise ausgeführten ersten Trockenschleudern kann der sich auf der Umfangsfläche des Zentrifugenraums 3, also auf dem Filtertuch 9, als Filterkuchen sammelnde Feststoff ein- oder mehrmals mit dem jeweils vorgesehenen Reinigungsmittel, z. B. Wasser, gewaschen und jeweils anschließend trockengeschleudert sowie mit Wasserdampf beaufschlagt werden. Das Reinigungsmittel bzw. der Wasserdampf werden hierbei dem Zentrifugeninnenraum durch das Einlaufrohr 1 zugeführt.

Nach ausreichender Reinigung des erfindungsgemäß zu behandelnden Feststoffs wird das aus den Platten 6 und 7 sowie den Stegen 8 bestehende und mit der Antriebswelle 4 fest verbundene Drehteil der Zentrifuge aus dem Bereich radial innerhalb des als Stützkorb für das Filtertuch 9 dienenden Spaltkorbs 5 in Pfeilrichtung 14 herausgefahren, derart, daß das Filtertuch 9 etwa zylindrisch zwischen Spaltsiebkorb 5 und Umfang der radialen Platte 6 aufgespannt wird. Durch diesen Stülpvorgang, der bei abgesenkter Drehzahl erfolgt, gelangt das gereinigte und geschleuderte Produkt auf die Umfangsfläche eines Rotationskörpers und wird in Pfeilrichtung 15 abgeschleudert.

Um den Zentrifugenraum 3 mit Dampf beaufschlagen zu können, ist das Einlaufrohr 1 an der Durchführung durch die radiale Platte 7 abgedichtet.

Anhand eines Ausführungsbeispiels werden noch weitere Einzelheiten des Verfahrens zum Reinigen von Celluloseether beschrieben:

Eine aus gemahlenem Fichtenzellstoff (alpha-Celluloseanteil ca. 93 %) hergestellte Methylhydroxyethylcellulose - kurz MHEC - wies nach Umsetzung und Entfernung überschüssigen Methylchlorids folgende Werte auf:

Feuchte:    32,7 %
Kochsalzgehalt:    27,3 %

Das salzhaltige Produkt wurde zunächst mit 95 bis 100 °C heißem Wasser angemaischt und in einem unter Druck zu betreibenden Behälter bevorratet. Aus diesem Vorratsbehälter wurde eine taktweise arbeitende Stülpfilterzentrifuge mit einem Durchmesser von 600 mm mit Hilfe einer Pumpe mit ca. 90 kg Suspension pro Takt befüllt. Für die Wäsche wurden 30 kg kochendes Wasser pro Zyklus benötigt.

Die Zentrifuge war mit einem aus multifilem Polyester bestehenden, dichten Filtertuch mit einer Luftdurchlässigkeit von ca. 50/l m² s bei 200 Pa bestückt.

Der folgende Zyklus lief an der Stülpfilterzentrifuge ab:

1. Befüllen bei 1.000 Umdrehungen/min in 60 s

2. I. Trockenschleudern bei 1.100 Umdrehungen/min für 30 s

3. Waschwasserzugabe bei 1.100 Umdrehungen/min für 10 s

4. II. Trockenschleudern bei 1.100 Umdrehungen/min für 20 s

5. Konditionieren mit Dampf bei 1.100 Umdrehungen/min für 20 s

6. III. Trockenschleudern bei 1.100 Umdrehungen/min für 30 s

7. Drehzahlabsenkung auf 550 Umdrehungen/min in 15 s

8. Umstülpen und Produkt austragen in 10 s

9. Hochfahren auf 1.000 Umdrehungen/min in 15 s

In dem nach Ziffer 8 und 9 ausgetragenen Produkt wurde eine Restfeuchte von 55 % bestimmt. Nach dem Trocknen wurden 12 kg Produkt pro Zyklus mit einem Kochsalzgehalt von 0,7 % erhalten. Die MHEC wies folgende Produktmerkmale auf:

Brookfield-Viskosität
(20 U/min, 20 $^\circ$C, 1 %ige Lösung) 4.450 m Pa s
Trübungszahl: 5 %
Flockungspunkt: 88 $^\circ$C
Substitutionsgrade

a) Methoxyl 23,4 %
b) Hydroxyethyl 8,9 %

Kochsalzgehalt und Restfeuchte können durch Wahl der Waschwassermenge und der Betriebsbedingungen an der Stülpfilterzentrifuge in weiten Grenzen eingestellt werden.

Bezugszeichenliste

1 = Einlaufrohr
2 = Auslaß
3 = Zentrifugenraum
4 = Antriebswelle
5 = Spaltsiebkorb
6 = radiale Platte
7 = radiale Platte
8 = Stege
9 = Filtertuch
10 = Pfeil
11 = Pfeil
12 = Loch
13 = Pfeil
14 = Pfeil
15 = Pfeil

## Ansprüche

1. Verfahren zum Reinigen von Celluloseethern und deren Derivate,
dadurch gekennzeichnet,
daß eine taktweise arbeitende Stülpfilterzentrifuge als Mittel zum Abtrennen der Suspensionsflüssigkeit und Waschen der Celluloseether und deren Derivate verwendet wird.

2. Verfahren nach Anspruch 1,
dadurch gekennzeichnet,
daß Celluloseether mit einem Flockungspunkt unter etwa 95 $^\circ$C in der Stülpfilterzentrifuge mit kochendem Wasser gewaschen werden.

3. Verfahren nach Anspruch 1,
dadurch gekennzeichnet,
daß Celluloseether mit einem Flockungspunkt von mehr als etwa 95 $^\circ$C in der Stülpfilterzentrifuge mit einer Wasser-Alkohol-Mischung, insbesondere bei etwa 15 bis 60 $^\circ$C, gewaschen werden.

4. Verfahren nach einem oder mehreren der Ansprüche 1 bis 3,
dadurch gekennzeichnet,
daß nach einer etwaigen Vernetzung mit Wasser bei einer Temperatur von 15 bis 40 $^\circ$C in der Stülpfilterzentrifuge gewaschen wird.

5. Verfahren nach einem der vorangehenden Ansprüche,
dadurch gekennzeichnet,
daß der in der Stülpfilterzentrifuge abgetrennte Filterkuchen vor dem letzten Trockenschleudern zentrifugeninnenseitig mit Wasserdampf beaufschlagt wird.

6. Verfahren nach einem der vorangehenden Ansprüche,
dadurch gekennzeichnet,
daß eine innenseitig dampfbeaufschlagbare Stülpfilterzentrifuge verwendet wird.

7. Verfahren nach einem der vorangehenden Ansprüche,
dadurch gekennzeichnet,
daß eine Stülpfilterzentrifuge verwendet wird, bei der das Einlaufrohr (1) und die radiale Platte (7) in ihrem gegenseitigen Berührungsbereich dampfdicht gegeneinander abgedichtet sind.

Henkel KGaA
D 7727 EP

Fig. 1

Henkel KGaA
D 7727 EP

Fig. 2

## EINSCHLÄGIGE DOKUMENTE

EP 88113910.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP - A1 - 0 001 792 (HOECHST AKTIENGESELLSCHAFT) <br><br> * Seite 2, Zeile 24 - Seite 4, Zeile 10; Beispiel 1 * <br><br> -- | 1 | C 02 F 1/72 <br><br> C 02 F 1/58 |
| A | DE - C - 972 284 (W. C. HOLMES) <br><br> * Anspruch 1 * <br><br> -- | 1 | |
| A | DE - B - 1 061 703 (W. C. HOLMES) <br><br> * Spalte 1, Zeilen 1-24 * <br><br> -- | 1 | |
| A | DE - A1 - 3 224 260 (TIOXIDE GROUP) <br><br> * Zusammenfassung * <br><br> ---- | 1 | |

RECHERCHIERTE SACHGEBIETE (Int. Cl.4)

C 02 F

Der vorliegende Recherchenbericht wurde für alle Patentansprüche erstellt.

| Recherchenort | Abschlußdatum der Recherche | Prüfer |
|---|---|---|
| WIEN | 05-12-1988 | WILFLINGER |